# EUROPEAN PATENT APPLICATION

(11) **EP 3 575 270 A1**
(43) Date of publication of application: **04.12.2019**
(21) Application number: 19177364.7
(22) Date of filing: 29.05.2019
(51) Int. Cl.: C02F 1/50, C02F 1/68

(54) **BIOCIDE SYSTEM WITH PASSIVE DISPENSER**

(30) Priority: 30.05.2018 US 201815992387
(71) Applicant: Hamilton Sundstrand Corporation, Charlotte, NC 28217-4578 (US)
(72) Inventor: STEELE, John W., New Hartford, CT 06057 (US); PEYTON, Barbara M., Windsor, CT 06095 (US); RECTOR, Tony, East Granby, CT 06026 (US)
(74) Representative: Dehns

(57) **Abstract**

A biocide system includes a water line (26) and a passive biocide dispenser (28) disposed in the water line. The passive biocide dispense includes a sustained-release material (40) that has a silver-based biocide dispersed in a water-dissolvable matrix (44).

## Description

### BACKGROUND

Water systems are used in manned space applications. For example, potable water may be used in space vehicles, spacesuits, oxygen generators, or other hardware used in space. Typically, iodine is added to the water to inhibit microbial proliferation. More recently, however, iodine has fallen into disfavor as the biocide of choice because of concerns for human health. To some degree, silver biocide has been used to replace a portion of the iodine. However, if mixed or used together, silver and iodine can react to form precipitates that may be detrimental to the performance of components in the water system. One solution is to restrict use of iodine and silver to separate water streams, but this adds complexity and does not eliminate the problem if the separate streams are inadvertently mixed.

### SUMMARY

A biocide system according to an example of the present disclosure includes a water line, and a passive biocide dispenser disposed in the water line. The passive biocide dispenser has a sustained-release material that has a silver-based biocide dispersed in a water-dissolvable matrix.

In a further embodiment of any of the foregoing embodiments, the sustained-release material is a coating.

In a further embodiment of any of the foregoing embodiments, the water-dissolvable matrix includes a silicate.

In a further embodiment of any of the foregoing embodiments, the silicate includes sodium silicate, potassium silicate, magnesium silicate, calcium silicate, aluminosilicate, or a combination thereof.

In a further embodiment of any of the foregoing embodiments, the water-dissolvable matrix additionally includes silica.

In a further embodiment of any of the foregoing embodiments, the silicate includes magnesium silicate, calcium silicate, or a combination thereof.

In a further embodiment of any of the foregoing embodiments, the water-dissolvable matrix additionally includes titanium dioxide, alumina, or a combination thereof.

In a further embodiment of any of the foregoing embodiments, the water-dissolvable matrix includes titanium dioxide, alumina, or a combination thereof.

In a further embodiment of any of the foregoing embodiments, the sustained-release material includes from 0.2 to 2 parts-by-weight of the silver-based biocide.

In a further embodiment of any of the foregoing embodiments, the sustained-release material includes from 20 to 30 parts-by-weight of sodium silicate, potassium silicate, magnesium silicate, calcium silicate, aluminosilicate, titanium dioxide, alumina, or a combination thereof.

In a further embodiment of any of the foregoing embodiments, the sustained-release material includes from 20 to 30 parts-by-weight of sodium silicate, potassium silicate, magnesium silicate, calcium silicate, aluminosilicate, or a combination thereof.

In a further embodiment of any of the foregoing embodiments, the sustained-release material includes from 20 to 30 parts-by-weight of magnesium silicate, calcium silicate, or a combination thereof.

In a further embodiment of any of the foregoing embodiments, the sustained-release material includes from 10 to 20 parts-by-weight of silica, aluminosilicate, titanium dioxide, alumina, or a combination thereof.

In a further embodiment of any of the foregoing embodiments, the passive biocide dispenser includes a housing defining an inlet, an outlet, and an interior cavity, and one or more walls within the interior cavity. The one or more walls include the sustained-release material.

In a further embodiment of any of the foregoing embodiments, the one or more walls include a plurality of parallel walls.

A biocide system according to an example of the present disclosure includes a water source that has liquid water, a water line connected to receive the liquid water from the water source, and a passive biocide dispenser disposed in the water line. The passive biocide dispenser has a sustained-release material that has a silver-based biocide dispersed in a water-dissolvable matrix. The sustained-release material has from 0.2 to 2 parts-by weight of the silver-based biocide and from 30 to 50 parts-by-weight of the water-dissolvable matrix.

In a further embodiment of any of the foregoing embodiments, the passive biocide dispenser includes a housing defining an inlet, an outlet, and an interior cavity, and a plurality of walls within the interior cavity. The plurality of walls include the sustained-release material.

In a further embodiment of any of the foregoing embodiments, the plurality of walls are parallel.

In a further embodiment of any of the foregoing embodiments, the sustained-release material is a coating on the plurality of walls.

In a further embodiment of any of the foregoing embodiments, sustained-release material includes from 0.8 to 1.2 parts-by weight of the silver-based biocide and from 39 to 45 parts-by-weight of the water-dissolvable matrix.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example biocide system.
Figure 2 illustrates a passive biocide dispenser.
Figure 3 illustrates a section to view of a wall of the biocide dispenser.
Figure 4 illustrates another example of a wall of a biocide dispenser.

### DETAILED DESCRIPTION

As will be described in the examples that follow, the disclosed biocide system provides a solution for passively adding controlled, low levels of silver biocide to liquid water, such as liquid water used in space structures (e.g., space vehicles, spacesuits, oxygen generators, and other space hardware) or even land-based structures or water processing systems, such as those in remote areas or developing countries. Moreover, the silver biocide can be added at or near the point of use of the water, as opposed to being added at a water reservoir in space or on the ground prior to transport into space.

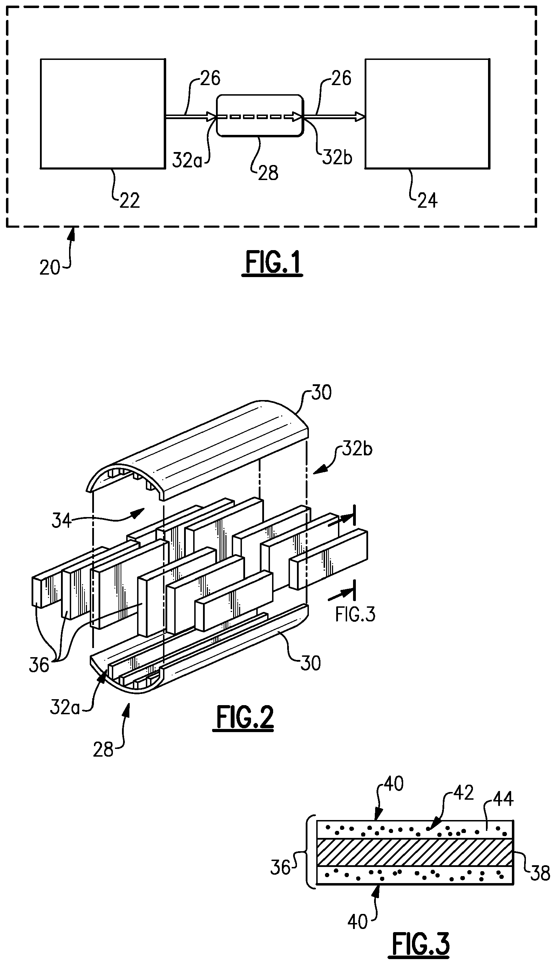

Figure 1 schematically illustrates a biocide system 20. In this example, the biocide system 20 includes a water source 22, a waste water reservoir 24, one or more water lines 26 that fluidly connect the water source 22 with the waste water reservoir 24, and a passive biocide dispenser 28 disposed in the water line 26. The water source 22 may be a reservoir where liquid water is stored until used, a water treatment unit that processes liquid water, hardware that utilizes liquid water (e.g., as a coolant) and then discharges water as an effluent, or other components that discharge water that is clean or used. Furthermore, as used herein, a "water line" refers to a line in a system that exclusively conveys liquid water or water-based liquid, either from a water source or from a point of use of water. As will be appreciated, although the water line 26 and dispenser 28 are shown in an example implementation with the water source 22 and the waste water reservoir 24, the water line 26 and the dispenser 28 may alternatively be used in other water systems, such as water systems that serve in a space structure.

Figure 2 illustrates an expanded view of an example of the dispenser 28. In this example, the dispenser 28 includes a two-piece housing 30 that, once assembled together, define an inlet 32a and an outlet 32b. Alternatively, the housing 30 may be a unitary structure or may be formed from more than two pieces. Generally, whether one or multiple pieces, the housing 30 is water-tight to provide leak-fee flow between the inlet 32a and the outlet 32b. The inlet 32a is fluidly connected to the water source 22, and the outlet 32b is fluidly connected to the waste water reservoir 24. The housing 30 further defines an internal cavity 34, in which there are one or more walls 36.

Figure 3 shows a representative sectioned view of one of the walls 36. The wall 36 includes a substrate 38, such as a stainless steel plate or panel, and a sustained-release material 40 disposed on the substrate 38. In this example, the sustained-release material 40 is in the form of a coating that is disposed on both of the opposed sides of the substrate 38. That is, the substrate 38 may be encapsulated by the coating of the sustained-release material 40. As an alternative, the substrate 38 could be excluded and the entirety of the wall 36 could be formed by the sustained-release material 40. At least in the case of stainless steel plates, the walls 36 may be separate and removable from the housing 30 or, alternatively, be integrally formed as part of the housing 30.

The sustained-release material 40 includes a silver-based biocide 42 dispersed in a water-dissolvable matrix 44. As liquid water in the water line 26 flows through the dispenser 28 the water contacts the walls 36 and slowly dissolves the matrix 44, thereby exposing and then releasing a portion of the silver-based biocide 42 entrapped in the matrix 44. As the matrix 44 dissolves over time additional silver-based biocide is exposed for subsequent release. Thus, as long as there is exposure to the flowing water, the sustained-release material 40 provides a constant supply of the silver-based biocide 42 into the water passing through the dispenser 28.

The dissolution of the matrix 44 and release of the silver-based biocide 42 in the dispenser 28 provides a passive construction for introducing the silver-based biocide 42 into the liquid water. As used herein, the term "passive" refers to the ability of the dispenser 28 to release the biocide into passing liquid water without reliance on active electrical controls or mechanical moving parts or devices. That is, the dispenser 28 needs no moving parts in order to serve its function of introducing the silver-based biocide 42 into the liquid water. Thus, there is no need for mechanical metering pumps to introduce the silver or control strategies to properly regulate such pumps in order to control the amount of silver added. Additionally, as used herein, the term "sustained-release" refers to the ability of the material to continually release the silver-based biocide 42, at least under the condition of exposure to liquid water. The sustained-release is not necessarily at a constant rate but is at least a constant release as long as there is liquid water exposure.

The composition of the matrix 44 can include a silicate, titanium dioxide, alumina, or combinations thereof. In further examples, the matrix 44 includes only the silicate, titanium dioxide, alumina, or combinations thereof. The silicate can include sodium silicate, potassium silicate, magnesium silicate, calcium silicate, aluminosilicate, or combinations thereof. Of these, magnesium silicate, calcium silicate, and combinations thereof may provide better dissolvability performance. The silicate, titanium dioxide, and/or alumina, serves as a backbone or binder to bind together the dispersed silver-based biocide 42. Additionally, the sustained-release material 40 may include a porosity or wetting agent. As an example, the porosity or wetting agent may include silica flour, alumina, titanium dioxide, zeolite, or combinations thereof.

In one example, the composition of the sustained-release material 40 includes from 20 to 30 parts by weight of the binder and from 10 to 20 parts by weight of the porosity or wetting agent. The silver-based biocide 42 can be present in an amount from 0.2 to 2 parts by weight. Such a concentration of the silver-based biocide 42 in the sustained-release material 40 may provide a concentration of silver in the water of 50 to 100 parts per billion, which is effective to inhibit microbial proliferation and is not harmful to humans, even when consumed in potable water. The other elements, such as those in the matrix are also incidentally released but are harmless to humans at the levels released, even when consumed in potable water. In a further example, the backbone or binder is from 26 to 28 parts by weight, the porosity or wetting agent is from 13 to 17 parts by weight, and the silver-based biocide 42 is from 0.8 to 1.2 parts by weight.

Within the dispenser 28, the number of walls 36 and the surface area provided by the sustained-release material 40 can be varied, along with the compositions as described above, to provide sustained release of a desired amount of the silver-based biocide 42 into the passing liquid water. For instance, as shown in Figure 2, the walls 36 are provided as plates or panels that are elongated in the direction of flow of the liquid water and that are parallel to each other. Thus, as the liquid water flows through the dispenser 28, it comes into contact with the surfaces along the walls 36 and thus into contact with the sustained-release material 40 for dissolution and release of the silver-based biocide 42 into the liquid water. In this regard, the dispenser 28 can, in some examples, serve in the system 20 as a biocidal "check valve" that inhibits proliferation of microbes back from the waste water reservoir 24 toward the water source 22. Additionally or alternatively, the dispenser 28 can be used either upstream or downstream of a point-of-use of the liquid water. For instance, the water source 22 may be a piece of hardware that utilizes the liquid water for cooling or other functions such that once the liquid water is dispensed, it flows through the dispenser 28 which then passively treats the water by adding the silver-based biocide 42.

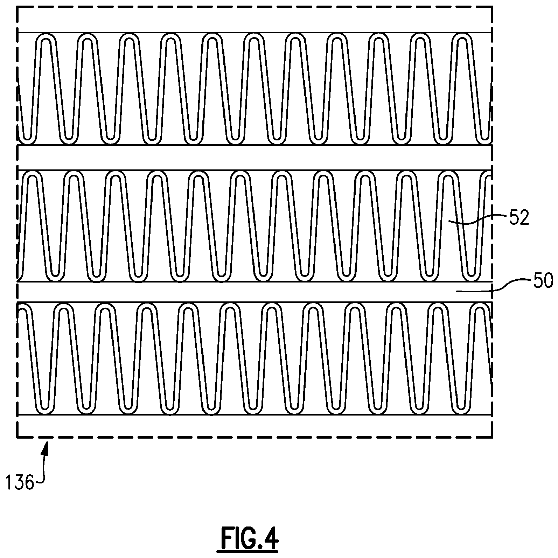

Figure 4 illustrates one modified example of a wall 136 that can be used in place of or in addition to the walls 36 described above. In this example, the wall 136 is or is similar to a structure of a heat exchanger. That is, the dispenser 28 may serve as a heat exchanger through which the liquid water flows in thermal communication with another fluid. For example, the wall 136 includes one or more tubes or passages 50 that are separated by fins 52. The sustained-release material 40 may be disposed on the fins 52 and on the outside of the tubes 50 or, alternatively, on inside interior passages of the tubes 50, depending upon where the water is to flow.

The dispenser 28 can be fabricated by depositing the sustained-release material 40 onto the substrate 38. For example, a mixture or slurry is prepared that contains the constituents of the sustained-release material 40. For instance, the silver-based biocide 42 is provided as a silver salt, such as silver nitrate, silver acetate, silver sulfate, silver phosphate, silver sulfide, silver oxide, or combinations thereof. The silver salt can then be mixed with the selected binder and porosity/wetting agent in the prescribed weights above, and with a water solvent. The substrate 38 can then be exposed to the slurry, such as by painting, dipping, or spraying. The coated substrate 38 is then dried, to remove the water, leaving only the constituents of the sustained-release material 40. The substrate 38 may then be further processed to consolidate the constituents, such as in a heating process.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the scope of the invention as defined by the following claims.

## Claims

1. A biocide system comprising:
a water line (26); and
a passive biocide dispenser (28) disposed in the water line, the passive biocide dispenser including a sustained-release material (40) including a silver-based biocide dispersed in a water-dissolvable matrix (44).

2. The biocide system as recited in claim 1, wherein the sustained-release material is a coating.

3. The biocide system as recited in claim 1 or 2, wherein the water-dissolvable matrix includes a silicate.

4. The biocide system as recited in claim 3, wherein the silicate includes sodium silicate, potassium silicate, magnesium silicate, calcium silicate, aluminosilicate, or a combination thereof.

5. The biocide system as recited in claim 4, wherein the water-dissolvable matrix additionally includes silica.

6. The biocide system as recited in claim 5, wherein the silicate includes magnesium silicate, calcium silicate, or a combination thereof.

7. The biocide system as recited in any preceding claim, wherein the water-dissolvable matrix includes titanium dioxide, alumina, or a combination thereof.

8. The biocide system as recited in any preceding claim, wherein the sustained-release material includes from 0.2 to 2 parts-by-weight of the silver-based biocide.

9. The biocide system as recited in claim 8, wherein the sustained-release material includes from 20 to 30 parts-by-weight of sodium silicate, potassium silicate, magnesium silicate, calcium silicate, aluminosilicate, titanium dioxide, alumina, or a combination thereof.

10. The biocide system as recited in claim 8, wherein the sustained-release material includes from 20 to 30 parts-by-weight of magnesium silicate, calcium silicate, or a combination thereof.

11. The biocide system as recited in any preceding claim, wherein the sustained-release material includes from 10 to 20 parts-by-weight of silica, aluminosilicate, titanium dioxide, alumina, or a combination thereof.

12. The biocide system as recited in any preceding claim, wherein the passive biocide dispenser includes a housing (30) defining an inlet (32a), an outlet (32b), and an interior cavity (36), and one or more walls within the interior cavity, the one or more walls including the sustained-release material.

13. The biocide system as recited in claim 12, wherein the one or more walls include a plurality of parallel walls.

14. A biocide system as defined in claim 8, or any claim dependent thereon, further comprising:
a water source (22) including liquid water;
the water line (26) connected to receive the liquid water from the water source; and
30 to 50 parts-by-weight of the water-dissolvable matrix.

15. The biocide system as recited in claim 14, wherein sustained-release material includes from 0.8 to 1.2 parts-by weight of the silver-based biocide and from 39 to 45 parts-by-weight of the water-dissolvable matrix.
